# EUROPEAN PATENT APPLICATION

(11) **EP 1 061 694 A2**
(43) Date of publication of application: **20.12.2000**
(21) Application number: 00112707.5
(22) Date of filing: 15.06.2000
(51) Int. Cl.: H04L 12/28, H04L 12/46

(54) **Inter-lan connection method access point apparatus and lan system**

(30) Priority: 15.06.1999 JP 16888699
(71) Applicant: NEC CORPORATION, Tokyo (JP)
(72) Inventor: Kudoh, Hikaru, c/o NEC Corporation, Tokyo (JP); Osawa, Tomoki, c/o NEC Corporation, Tokyo (JP)
(74) Representative: Betten & Resch

(57) **Abstract**

The present invention is intended to dispense with setting of a synchronization mode or a processing procedure and to make possible filtering between wire and wireless sections at wireless access points (APs) connecting a plurality of wired LANs. A method for inter-LAN connection, an access point apparatus and a LAN system according to the invention entitle every AP to deliver a synchronization frame at a certain probability in a random back-off procedure, and enable each AP to establish synchronism independently in a decentralized manner. They also perform filtering by authentication of prior registration in the wireless section. Furthermore, they use a filtering table for bridging use into which the addresses of fixed terminals on the wired LANs are stored on the basis of the source addresses of frames received from the wired LAN side and out of which addresses are deleted on the basis of the source addresses of frames received from the wireless LAN side and bridged to the wired LAN side.

## Description

### BACKGROUND OF THE INVENTION

### 1. Field of the Invention

The present invention relates to a LAN system, and more particularly to a method for inter-LAN connection, an access point apparatus and a LAN system in a LAN network for connecting physically distant wired LANs with a wireless LAN via an access point.

### 2. Description of Related Art

A LAN network for connecting physically distant wired LAN systems with a wireless LAN is useful, for instance, in mutually connecting wired LANs installed on high floors of a plurality of buildings positioned on the opposite sides of a street. Thus, connecting such LANs with a wireless LAN can solve the cost problem and many other problems which would arise if wired connection is used.

One of the available network forms for a wireless LAN is a network system consisting of access points (APs) provided on an existing LAN cable of an Ethernet or the like, which is to serve as the backbone, and stations (STAs) operating in synchronism with the APs, wherein the STAs can communicate via the APs with fixed terminals on the existing wired LANs.

Each STA, as it is connected wirelessly, can freely move within the reach of electric waves to and from the corresponding AP. There is an additional advantage of requiring no complex rewiring.

For this reason, a wireless LAN network, if applied to a system for network connection of a plurality of terminals on a floor of a building for instance, is expected to help reduce the rewiring cost incurred by any change in the floor layout or the like and increase the system responsiveness to a new form of business operations by shifting terminals.

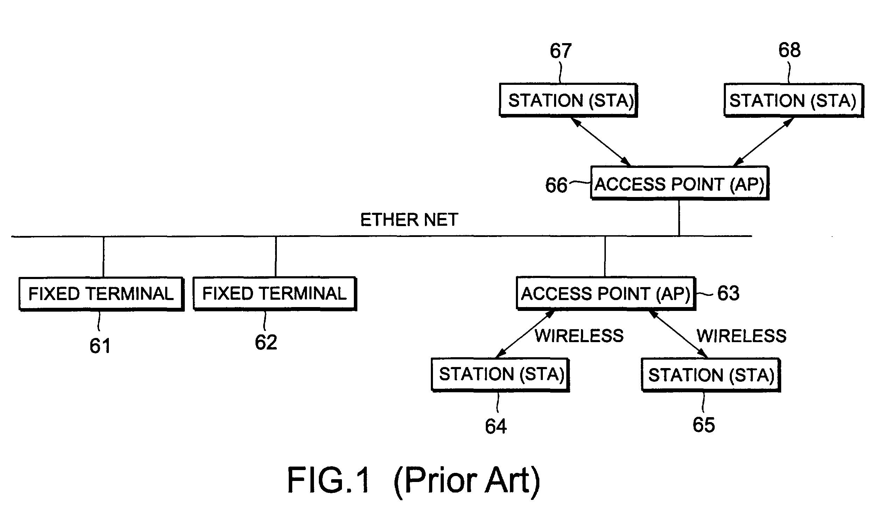

FIG. 1 illustrates an example of configuration of a network in which such a wireless LAN is connected to wired LANs.

In the network system shown in FIG. 1, APs 63 and 66 are provided on wired LANs of an Ethernet or the like having a plurality of fixed terminals 61 and 62.

Between the AP 63 and the plurality of STAs 64 and 65 and between the AP66 and the plurality of STAs 67 and 68 wireless LANs are organized.

Then fixed terminals are connected to each other with a wired LAN, and connection between the fixed terminals and STAs and mutual connection between the STAs are accomplished with wireless LANs, to transmit data.

In this network, each AP usually manages the synchronization of communication among the plurality of STAs connected to it and controls information for identifying the STAs to be connected. Here the AP, referencing data transmitted over a wired LAN, judges whether or not they are data to be transmitted to any STA connected to the AP and, if it judges that they are, delivers them to the wireless section. This judgment is known as filtering. Methods of filtering by APs are disclosed in the Japanese Patent Application Laid-open No. Hei 8-274804 and elsewhere, and they are now effectively used for practical purposes.

Another available network form for wireless LANs consists solely of STAs, commonly known as an ad hoc network. This type of network is typically used for temporary application, for instance in the direct connection of terminals brought in by members participating in a meeting in a conference room.

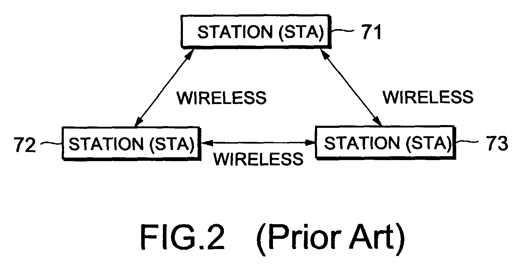

FIG. 2 is a block diagram illustrating an example of configuration of an ad hoc network.

The network system illustrated therein communicates by transmitting wireless frames among a plurality of STAs 71, 72 and 73.

Both these network forms are standardized as wireless LANs.

The network illustrated in FIG. 1 is defined as an integration type network, while the ad hoc network shown in FIG. 2 is defined as an independent basic service set (IBSS) prescribed by IEEE802.11 "Wireless LAN Medium Access Control (MAC) and Physical Layer (PHY) specification". The synchronization method, communication method and the like for each are expressly specified (see ISO/IEC DIS 8802-11 IEEE P802.11/D10, 14 Jan. 1999, pp. 46-59 and 125-127).

Major differences between the two are described below.

In the integration type network, APs centrally manage synchronization by periodically transmitting information on synchronization. The IBSS, on the other hand, is incapable of centralized management of synchronization as it consists solely of STAs. For this reason it uses a synchronization frame known as a Beacon frame, and all the STAs are equally entitled to transmit this Beacon frame and synchronization is thereby managed in a decentralized manner.

According to the latter synchronization management method, individual STAs achieve synchronization by transmitting the Beacon frame at mutually synchronized Beacon intervals, only one STA transmitting the Beacon frame at any one Beacon interval. A Beacon frame contains the following items of information: a baseband data system and a carrier modulation system for physical layers, a time stamp at the time of transmitting the Beacon frame utilized as synchronization information, the Beacon interval and so forth.

Each STA manages the transmission timing of the Beacon frame so that Beacon frames may not run into collision on a wireless line but can be normally received. More specifically, each STA, after waiting for (delaying by) a random length of time according to uniform distributions independent of each other at the starting time of a Beacon interval, delivers the Beacon frame.

Each STA, if no Beacon frame is received from any other STA during the waiting period, delivers for itself a Beacon frame as scheduled. This enables each STA to achieve synchronization in an independent decentralized manner. This method is standardized as a random back-off algorithm.

In the actual market, a number of other forms than the two typical examples of network form according to the prior art are needed. For instance, where a single network is desired to be organized by connecting networks in physically distant locations as in the above-cited case of high floors of a plurality of buildings separated by a street between them, it is difficult to connect two wired LANs with a cable, and a solution to solve this problem by using a wireless LAN is generally known.

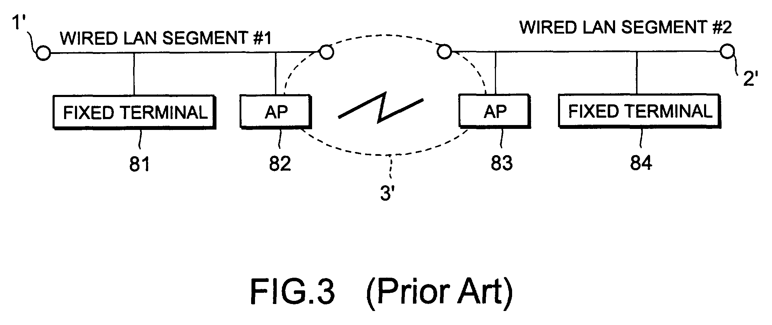

FIG. 3 illustrates such a network form. The system shown in FIG. 3 has a wired LAN segment #1 having fixed terminals 81 and so on and a segment #2 having fixed terminals 84 and so on as physically distant wired LANs, and they are respectively provided with access points AP82 and 83 to constitute a bridge between the wired section and the wireless section and thereby connect the wired LANs with the wireless LAN 3'

These embodiments of the prior art, however, involve a number of problems.

For instance, where a network is to be organized by connecting physically distant locations, such as a plurality of buildings positioned on the opposite sides of a street and having wired LANs installed in them, a bridge between the buildings can be established by installing APs capable of long-distance communication in the plurality of buildings and having the APs performing wireless communication between them, and a LAN system in which a plurality of independent wired LANs can form a single common domain is thereby realized.

However, where APs are provided on a plurality of wired LANs to connect the LANs wirelessly, no connection can be accomplished by the synchronization method illustrated in FIG. 1 for the network APs. In other words, since an AP effects centralized control over the STAs all the time according to the synchronization method shown in FIG. 1, mutual connection with other APs is difficult. Therefore, it entails difficult problems in the wireless connection of LANs, including the need to develop a new AP apparatus corresponding to the STAs shown in FIG. 1.

Or, where APs are provided on a plurality of wired LANs to connect the LANs wirelessly, since the network configuration is such that fixed terminals and APs are connected to each wired LAN, each AP has a transmitter address TA and a receiver address RA and each fixed terminal has a source address SA and a destination address DA, or a total of four different kinds of addresses, which poses the problem that such prior art methods of filtering whereby the frames supplied by fixed terminals are either connected or discarded between wired sections and wireless sections or address processing in APs cannot be applied.

### SUMMARY OF THE INVENTION

An object of the present invention, therefore, is to provide a method for inter-LAN connection, an access point apparatus and a LAN system which make possible connection of wired LANs without having to set the synchronization mode of access points or newly providing its processing procedure.

Another object of the invention is to provide a method for inter-LAN connection, an access point apparatus and a LAN system which make possible filtering among a plurality of wired LANs.

In order to achieve these objects, by a method for inter-LAN connection according to the invention, each access point establishes synchronism by delivering a synchronization frame according to the provisions of an ad hoc network.

Each access point has either a filtering table for storing authentication information on the source access points of frames received from a wireless LAN or a filtering table in which information on prior registrations is stored, references the table when a frame is received from the wireless LAN, and bridges the frame from the wireless LAN to a wired LAN in accordance with prescribed conditions. Each access point carries out learning by adding to or deleting from information on the prior registration as appropriate.

Further, access point apparatuses according to the invention set an independent delay time for each access point apparatus according to the probability of uniform distribution, establish synchronism by delivering a synchronization frame, and transmit or receive frames according to each received or transmitted synchronization frame.

Each access point apparatus according to the invention has either a filtering table for storing authentication information on the source access points of frames received from a wireless LAN or a filtering table in which information on prior registrations is stored, references the table when a frame is received from the wireless LAN, and has a filtering means to bridge the frame from the wireless LAN to a wired LAN in accordance with prescribed conditions.

Further each access point apparatus according to the invention has a learning function to manage information stored in the filtering table by adding to or deleting it as appropriate.

A LAN system according to the invention connects a plurality of independent wired LANs, each equipped with a plurality of terminal apparatuses mutually connected by a LAN cable and one or more wireless access point apparatus or apparatuses with wireless access point apparatuses in a random back-off procedure so as to form a single common domain.

### BRIEF DESCRIPTION OF THE DRAWINGS

The above and other objects, features and advantages of the present invention will become more apparent from the following detailed description when taken in conjunction with the accompanying drawings wherein:
FIG. 1 is a block diagram illustrating an example of configuration of a network consisting of wireless LANs connected to a conventional wired LAN;
FIG. 2 is a block diagram illustrating an example of configuration of an ad hoc network;
FIG. 3 is a block diagram illustrating the prior art;
FIG. 4 is a block diagram illustrating a preferred embodiment of inter-LAN connection according to the invention;
FIG. 5 (a)-(c) are time charts outlining the synchronizing operation according to a random back-off algorithm in this embodiment;
FIG. 6 (a) and (b) illustrate how a frame header is converted in the embodiment of the invention;
FIG. 7 illustrates a filtering table held by an AP on a wired LAN in the embodiment of the invention;
FIG. 8 is a flow chart of a filtering operation which takes place when an AP receives a frame from a wired LAN;
FIG. 9 is a flow chart of a filtering operation which takes place when an AP receives a frame from a wireless LAN according to the invention; and
FIG. 10 is a processing flow chart of a configuration in which prior registrations are to be made in the embodiment of the invention.

### DETAILED DESCRIPTION OF THE PREFERRED EMBODIMENTS

### (First Preferred Embodiment of the Invention)

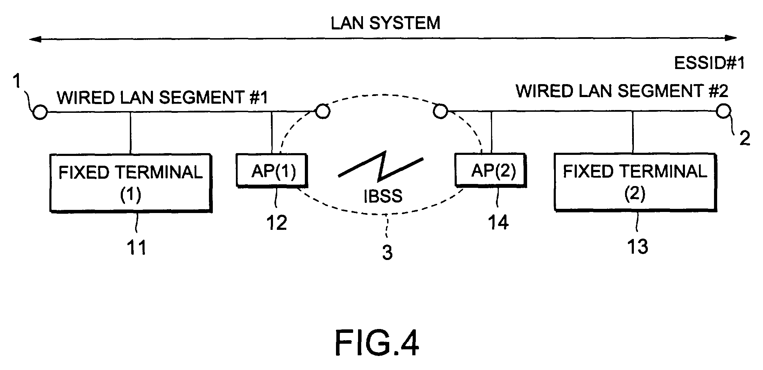

A method for inter-LAN connection, an access point apparatus and a LAN system embodying the invention will be described below with reference to FIG. 4.

FIG. 4 is a conceptual diagram of the method for inter-LAN connection, the access point apparatus and the LAN system embodying the invention. In this instance, for the sake of simplicity of description, there is shown a configuration in which only two wired LANs are connected wirelessly. In this configuration, a wired LAN #1 having a fixed terminal (1) 11 and an access point AP (1) 12 and wired LAN #2 having a fixed terminal (2) 13 and an access point AP (2) 14 on a LAN cable are present, each in a separate region, and a wireless LAN is organized between the AP (1) 12 (hereinafter AP1) and the AP (2) 14 (hereinafter AP2). The wireless section between the AP1 and AP2 is composed of the aforementioned ad hoc network.

In other words, for the wireless connection between the wired LANs in this embodiment, an independent basic service set (IBSS) prescribed by IEEE802.11 "Wireless LAN Medium Access Control (MAC) and Physical Layer (PHY) specification" is adopted, and synchronization and communication between IBSSs on that basis make possible connection between the LANs. When establishing synchronism between the APs, whether connection is possible or not is determined by using an extended service set identifier (ESSID) prescribed by IEEE 802.11. The AP1 and AP2 make possible mutual communication by bridging the frames transmitted over the wired LANs #1 and #2.

The physical form of the network illustrated in FIG. 4, more specifically, is a case in which the wired LANs #1 and #2 (hereinafter LAN1 and LAN2, respectively) are present in different buildings, which are positioned on the opposite sides of a street. In such a situation, since it is physically difficult to connect the wired LAN1 and LAN2 by wire though they logically belong to the same network, the AP1 and AP2 are installed to connect the LANs to effect wireless bridging and thereby make possible mutual connection between the wired LANs. Further, the wired LAN1 and wired LAN2, as they logically belong to the same network, permit additional connection of fixed terminals, removal of connected fixed terminals and shifting of any fixed terminal or terminals among the plurality of wired LANs. Description follows on the establishment of synchronism, the filtering table composition of each AP, filtering operation and so forth to realize the above-described functions of this embodiment.

First will be described the configuration and operation for the establishment of synchronism in the connection of LANs in the embodiment of the invention.

In FIG. 4, the AP1 and AP2 are configured to maintain synchronism independently and in a decentralized manner by constituting IBSSs prescribed by IEEE 802.11. In an IBSS each station, in order to maintain the synchronism of the mutually delivered frames, transmits a Beacon frame as a synchronization frame for the control purposes including necessary control information. In the Beacon frame are stored, in addition to a baseband data system and a carrier modulation system for physical layers, a time stamp at the time of transmitting the Beacon frame as synchronization information, the Beacon interval and so forth. Each station, on the basis of the synchronization information, determines its own timing for transmitting or receiving a Beacon frame with reference to the timing of transmitting or receiving the delivered Beacon frame, and carries out communication on that basis.

This synchronization method uses a random back-off algorithm. Each station, as it transmits and receives the Beacon frame at the Beacon intervals, which are synchronized among the different stations, manages the transmission timing of the Beacon frame so that Beacon frames may not run into collision on the wireless line but can be normally received.

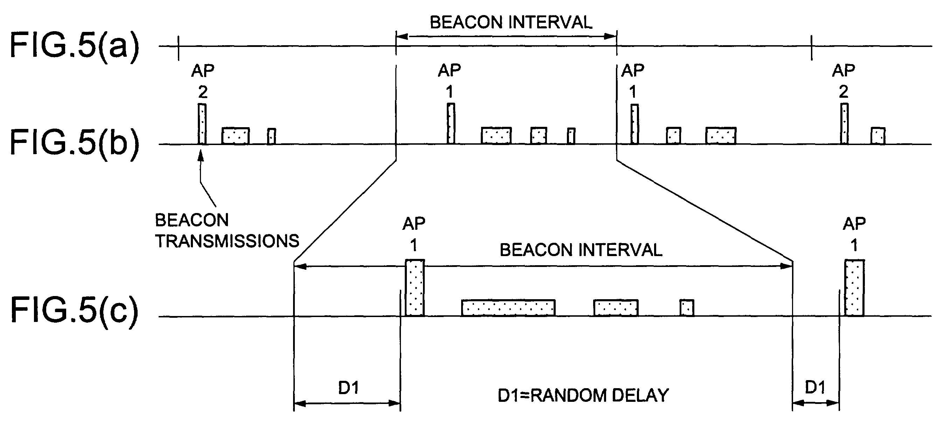

FIG. 5 is a time chart outlining the synchronizing operation according to the random back-off algorithm in this embodiment. FIG. 5 (a) illustrates the Beacon interval, which is the basic information according to which individual APs establish synchronism in mutual communication.

The Beacon interval is the information which serves as the reference for delivering a Beacon frame, and the individual APs share the Beacon interval information, i.e. the information on the absolute length between the starting point of one interval and that of the next. FIG. 5 (b) illustrates Beacon frames AP2, AP1 and AP1, ... actually delivered from the individual APs in the wireless section in a state in which each AP delivers a frame with reference to one or another of the aforementioned Beacon frames, while FIG. 5 (c) is a time chart in which those time lengths are expanded.

As is evident from FIG. 5, in the random back-off algorithm, the sequence of the Beacon frames AP2, AP1 and AP1, ... actually delivered from the individual APs is not fixed. In other words, there is no relationship of subordination in synchronism between the APs, but each AP delivers a Beacon frame at random. Such a rule of Beacon frame delivery is realized at each AP, at the starting point of a Beacon interval, sets the delivery time so as to deliver a Beacon frame after waiting for (delaying by) a random length of time (D1) according to mutually independent uniform distributions and, if no Beacon frame is received from any other station at each timing, delivers a Beacon frame for itself as scheduled. Therefore, Beacon frame delivery by each station is so controlled that if, at the time it is scheduled to deliver a Beacon frame, a Beacon frame is received from another station, it refrain from delivering a Beacon frame.

Basically only one Beacon frame is delivered at each Beacon interval, though in an extremely rare case a plurality of Beacon frames may be delivered at the same time if a plurality of APs have happened to set such delivery timings that each output a Beacon frame in the same waiting time (D1) according to the probability of each. Therefore, each AP can establish synchronism with reference to a Beacon frame delivered in this manner.

The decentralized control by each AP makes it possible to prevent collision of Beacon frames between APs and enables each station to establish synchronism according to algorithm and thereby to perform synchronizing operation.

It is further made possible to determine according to an extended service set identifier (ESSID) contained in the Beacon frame, when establishing synchronism between APs, whether or not the APs are to be connected to the desired network. Thus, by applying the IBSS procedure to communication between APs carrying out inter-LAN connection, connection between the LANs is made possible without having to set each AP to be a master AP or a slave AP and without having to provide a new procedure for determining that setting.

Next will be described address manipulation in the APs after the establishment of synchronism in this preferred embodiment.

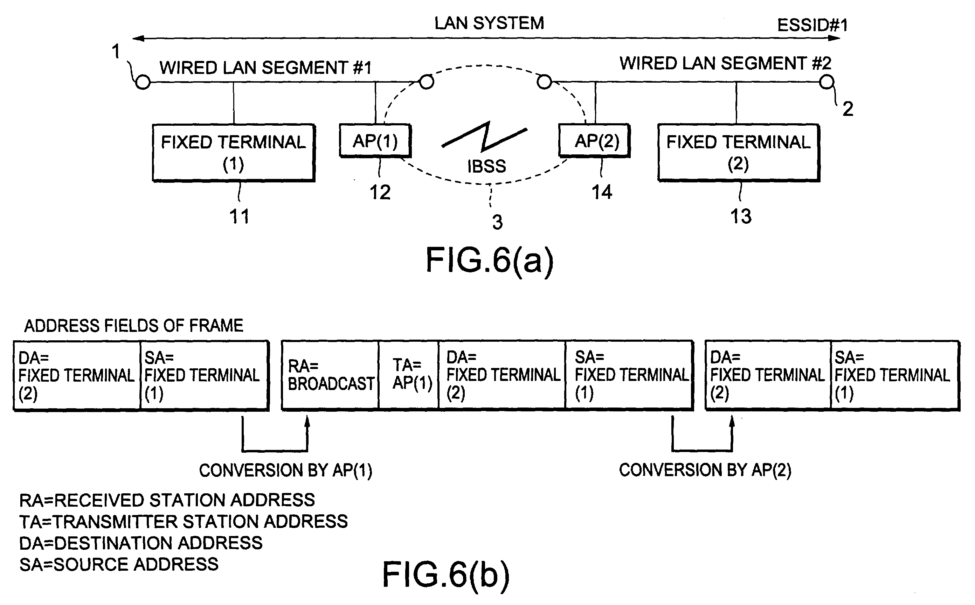

FIG. 6 illustrates how a frame header is converted in the wired section and the wireless section, and this is an example of frame header conversion in which the fixed terminal 11 on the wired LAN1 in FIG. 6 delivers a frame to the fixed terminals 13 on the wired LAN 2. The frame format that is used is the frame format for communication between APs prescribed by IEEE 802.11.

On the wired LAN, the MAC address of the fixed terminal 13 is inserted into the destination address (DA) field, and the MAC address of the fixed terminal 11 is inserted into the source address (SA) field. In the wireless section, the receiver address (RA) field and the transmitter address (TA) field are added to the header of the wired LAN1. Into the receiver address field is inserted a broadcast address meaning that it is destined for every station, and into the transmitter address field is inserted the MAC address of the AP1. It is supposed that a plurality of APs to receive frames of the wireless section be installed, and by inserting the broadcast address into the receiver address field the plurality of APs are enabled to receive the frames.

Next will be described the configuration and function of filtering in the preferred embodiment of the invention.

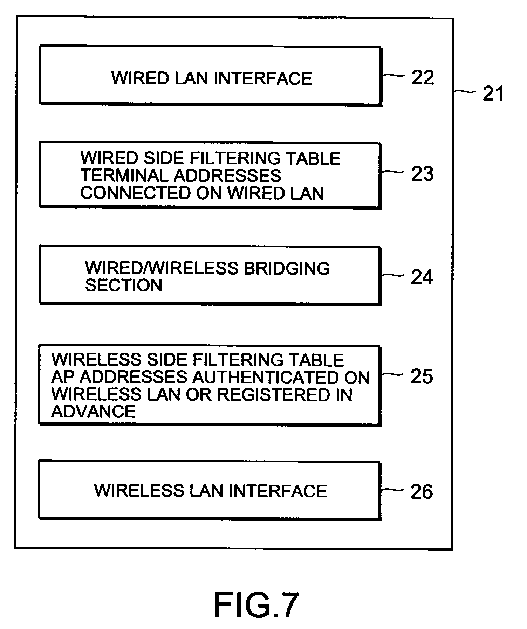

FIG. 7 illustrates a filtering table held by an AP on a wired LAN. A filtering table 21, matching the wired LAN, has a wired LAN interface 22 and a wired side LAN filtering table 23 for storing the addresses of terminals connected on the wired LAN and, matching the wireless LAN, has a wireless LAN interface 26 and a wireless side filtering table 25 for storing AP addresses either authenticated or registered in advance, as will be explained later, on the wireless LAN. It further has a wired/wireless bridging section 24 for bridging a frame between wired and wireless sections.

Each AP, in order to bridge (transfer) a frame to be transmitted between the wired section and the wireless section selectively as to wired or wireless transmission, performs filtering control over the frame with reference to the wired side filtering table 22 and the wireless side filtering table 25. For this purpose, each AP stores the addresses of fixed terminals connected to the wired LAN under its control into the wired side filtering table 23 by its learning function according to the source address of the frame on the wired LAN and stores the authentication information and the like of the AP into the wireless side filtering table 25.

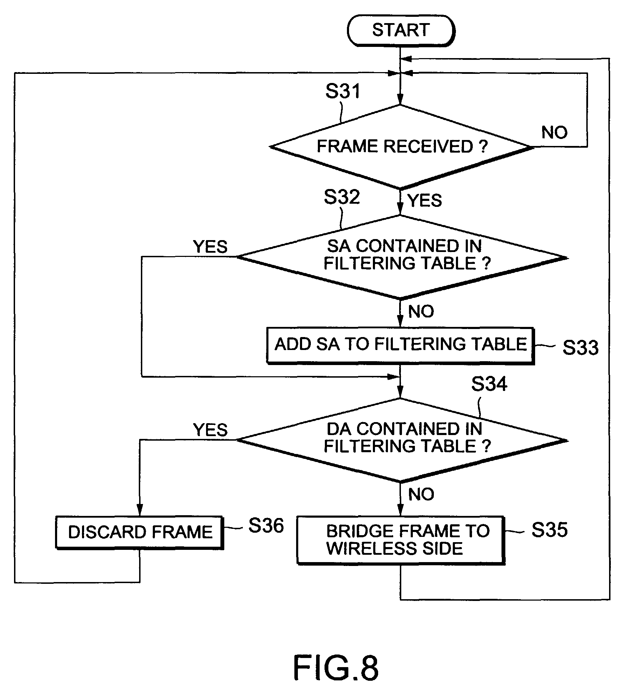

FIG. 8 is a flow chart of a filtering operation which takes place when an AP receives a frame for bridging from a wired section to a wireless section.

Referring to FIG. 8, when an AP receives a frame for bridging from a wired LAN to a wireless LAN (step S31), the AP first references the wired side filtering table 23 and judges whether or not the source address SA of the frame is contained in the wired side filtering table 23 (step S32) and, if it is not, adds the SA to the wired side filtering table 23 (step S33). Then, it again references the wired side filtering table 23 and judges whether the destination address DA of the frame is contained in the wired side filtering table 23 (step S34) and, if it is, discards the frame (step S36) or, if it is not, bridges the frame to the wireless side (step S35).

In the flow chart of FIG. 8, steps S32 and S33 are steps at which the AP performs the function of learning the filtering table of the SA of the frame the AP has received from the wired LAN. In addition to the learning of existing fixed terminals, the SAs of fixed terminals newly connected to the wired LAN or shifted from another wired LAN are also learned. At steps S34 and S36, filtering is performed to forbid the frame to be transferred to the DA present on the wired LAN to which the AP is connected from being bridged to the wireless side of the AP.

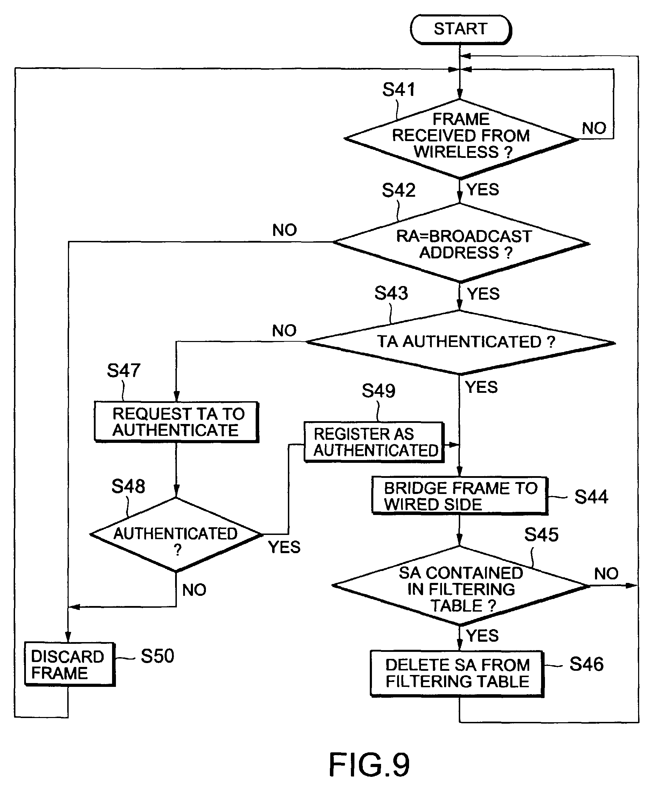

FIG. 9 is a flow chart of a filtering operation which, when an AP receives a frame from a wireless section, is performed by the receiving AP.

When an AP receives a frame from the wireless side (step S41), it judges whether or not the RA of the received frame is a broadcast address (step S42) and, if the RA is not a broadcast address or the received frame is an unsuitable frame, discards the frame (step S50). Or if the RA is a broadcast address, it references the wireless side filtering table 25, and judges whether or not the TA of the received frame is authenticated as a transmitter address of the network (step S43). If the TA is not authenticated because, for instance the procedure of authentication which is supposed to follow the establishment of synchronism or the like is not completed yet, the receiving AP requests the AP having transmitted the frame to authenticate it (step S47). Then it judges whether or not the transmitting AP has authenticated the TA (step S48); upon confirmation of the authentication of the TA, it stores the authentication into the wireless side filtering table 25 (S49); it bridges the received frame to the wired side (step S44); and it judges whether not the SA of the received frame is contained in the wired side filtering table 23 (step S46). If the SA is contained in the filtering table 23, the SA is deleted from the filtering table (step S46).

Steps S45 and S46 in the flow chart of FIG. 9 provide the function of learning to delete, when the fixed terminal on the wired LAN to which the frame is to be bridged has been removed by shirting or otherwise, the address of that fixed terminal from the filtering table. Thus, when a fixed terminal which was previously connected via a wired LAN has been shifted to another wired LAN and has transmitted the frame via a wirelessly connected LAN, the AP detects this change after bridging from the wireless section to the wired section, and deletes the registration of that SA already learned and stored in the filtering table of the AP.

According to the present invention, since each AP achieves synchronization independently in a decentralized manner with a synchronization frame, there is no need to have a complex configuration in which different levels of priority are assigned to different APs, such as differentiating master and slave APs, and different operations are made possible for different synchronization modes, master and slave. This enables the hardware configuration to be simplified. Also, as there is no need to determine, at the time of the establishment of synchronism, each AP to be either master or slave, it is possible to connect a plurality of wired LANs with wireless LANs linking wireless APs and form a single common domain without having to organize a non-standard new procedure, such as a procedure for negotiations.

Further according to the invention, filtering with authentication information in the wireless section can prevent any AP, fixed terminal or the like not registered in the authentication information from unauthorized entrance into the network.

According to the invention, by using filtering tables for bridging use having learning functions to store the address of a fixed terminal on a wired LAN on the basis of the source address of a frame received from the wired LAN side and to delete the address on the basis of the source address of a frame received from the wireless LAN side and bridged to the wired LAN side, a plurality of wired LANs connected by the wireless LAN can be organized into a network in which address information in the filtering tables is constantly updated and address management is rationally carried out even if terminals are shifted between wired LANs.

### (Another Preferred Embodiment of the Invention)

While in the embodiment described so far frame bridging from a wireless section to a wired section requires that authentication be requested from the AP receiving a frame to the AP transmitting it and the latter gives authentication in the procedure to transfer a frame from one AP to another, it is also possible, instead of going through such an authentication procedure, to design a configuration emphasizing security in which genuine APs and the like are registered in advance into the wireless side filtering table of each AP.

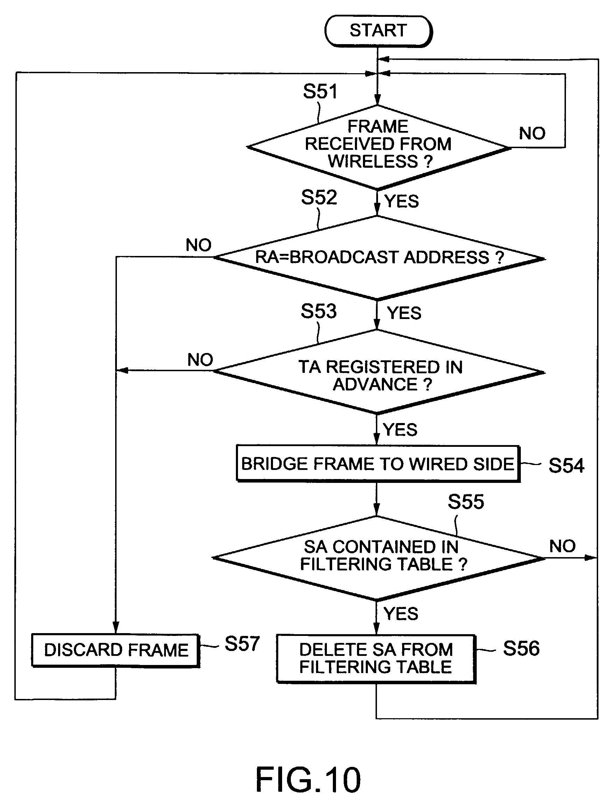

FIG. 10 shows a processing flow in the configuration in which the above-described request for authentication if replaced by prior registration. As in the processing illustrated in FIG. 6, the AP receives a frame from the wireless side (step S51) and, if the RA of the received frame is a broadcast address, references the wireless side filtering table 25 to judge whether or not the TA is registered in advance (step S53). If it is already registered, the frame is bridged to the wired side (step S54) or, if it is not, the frame is discarded (step S57). In this case, it is preferable to have a configuration in which setting of prior registration is requested or processing information on frame discarding is displayed in some way or other.

Specifically, the prior registration can be so configured as to additionally register or delete the pertinent information. It is also possible to so configure the prior registration as to register the MAC address of the AP whose connection is to be permitted into the wireless side filtering table 25. Another conceivable configuration is to allow, in such a procedure as authentication at the time of establishing IBSS between APs, checking of whether or not the MAC address of the other AP is registered.

In the above-described embodiment of AP apparatus, where a frame received from a wired LAN is to be transmitted to a wireless LAN, there are supposed to be a plurality of receiver APs that should be covered, and a broadcast address is used as the receiver address of the wireless frame header, but an intrinsic address of the receiver AP can be used instead of a broadcast address where only one receiver AP can be specified for coverage.

Further, the wireless side filtering table can as well be so configured as to add, if authentication is successfully done in response to an authentication request to the transmitter AP, the pertinent transmitter address to the already stored authenticated information or as not to permit addition. In addition, such setting can be done in advance either for all the transmitter APs or individually for each transmitter AP.

Moreover, while a configuration of the filtering table divided into the wired side and the wireless side was described, obviously only logical division suffices, and it can be configured as a physically single filtering table.

According to the present invention, filtering with prior registration information in the wireless section can prevent APs or fixed terminals not registered in advance from effecting unauthorized entrance into the network.

According to the invention, by providing one or more wireless access point apparatus or apparatuses for each of a plurality of independent wired LANs and connecting the wireless accessing apparatuses to one another in a random back-off procedure, it is possible to provide a LAN system permitting connection of a plurality of independent wired LANs so as to form a single common domain in accordance with a standardized procedure.

While the present invention has been described with reference to certain preferred embodiments, it is to be understood that the subject matter encompassed by this invention is not to be limited to those specific embodiments.

Instead, it is intended for the subject matter of the invention to include all such alternative modifications and equivalents as can be included within the spirit and scope of the invention.

## Claims

1. A method for inter-LAN connection whereby a plurality of wired LANs to which fixed terminals are connected are connected to a wireless LAN via an access point on each wired LAN, and
each access point establishes synchronism by delivering a synchronization frame after predetermined delay time on condition that no synchronization frame is received from any other access point.

2. A method for inter-LAN connection, as claimed in Claim 1, whereby:
the procedure in which each access point delivers a synchronization frame conforms to the provisions of an ad hoc network.

3. A method for inter-LAN connection whereby a plurality of wired LANs to which fixed terminals are connected are connected to a wireless LAN via an access point on each wired LAN,
each access point has a filtering table for storing authentication information of the access points of the sources of frames received from the wireless LAN,
references said filtering table for any frame received from the wireless LAN and, if it is authenticated, bridges the frame from the wireless LAN to the wired LAN or, if it is not authenticated, discards the frame.

4. A method for inter-LAN connection whereby a plurality of wired LANs to which fixed terminals are connected are connected to a wireless LAN via an access point on each wired LAN,
each access point has a filtering table for storing authentication information of the access points of the sources of frames received from the wireless LAN,
references said filtering table for any frame received from the wireless LAN and, if it is authenticated, bridges the frame from the wireless LAN to the wired LAN or, if it is not authenticated, bridges the frame from the wireless LAN to the wired LAN after having acquired authentication by the access point having delivered the frame.

5. A method for inter-LAN connection, as claimed in Claim 4, whereby:
each access point stores a frame received from the wireless LAN into said filtering table if authentication is newly acquired from the access point having delivered the frame.

6. A method for inter-LAN connection whereby a plurality of wired LANs to which fixed terminals are connected are connected to a wireless LAN via an access point on each wired LAN,
each access point has a filtering table for storing information on the prior registration of the access points of the sources of frames received from the wireless LAN,
references said filtering table for frames received from the wireless LAN and bridges any frame delivered from any access point registered in advance to the wired side LAN.

7. A method for inter-LAN connection, as claimed in Claim 6, whereby:
each access point stores or deletes as appropriate information on prior registration of the access points of the sources of frames to be stored in said filtering table.

8. A method for inter-LAN connection, as claimed in Claim 3, whereby:
each access point stores into said filtering table the address of fixed terminals on the wired LANs on the basis of the source addresses of frames received from the wired LAN side, and deletes, on the basis of the source address of any frame received from the wireless LAN side and bridged to the wired LAN side, the pertinent stored address.

9. A method for inter-LAN connection, as claimed in Claim 4, whereby:
each access point stores into said filtering table the address of fixed terminals on the wired LANs on the basis of the source addresses of frames received from the wired LAN side, and deletes, on the basis of the source address of any frame received from the wireless LAN side and bridged to the wired LAN side, the pertinent stored address.

10. A method for inter-LAN connection, as claimed in Claim 6, whereby:
each access point stores into said filtering table the address of fixed terminals on the wired LANs on the basis of the source address of frames received from the wired LAN side, and deletes, on the basis of the source address of any frame received from the wireless LAN side and bridged to the wired LAN side, the pertinent stored address.

11. An access point apparatus for use in inter-LAN connection whereby a plurality of wired LANs to which fixed terminals are connected are connected to a wireless LAN via an access point on each wired LAN,
said access point apparatus
establishes synchronism by delivering a synchronization frame after predetermined delay time on condition that no synchronization frame is received from any other access point, and transmits or receives frame with reference to said synchronization frame that has been received or transmitted.

12. An access point apparatus for use in inter-LAN connection whereby a plurality of wired LANs to which fixed terminals are connected are connected to a wireless LAN via an access point on each wired LAN,
said access point apparatus
has a filtering table for storing authentication information of the access points of the sources of frames received from the wireless LAN, and a filtering unit for referencing said filtering table for any frame received from the wireless LAN and, if it is authenticated, bridging the frame from the wireless LAN to the wired LAN or, if it is not authenticated, discarding the frame.

13. An access point apparatus for use in inter-LAN connection whereby a plurality of wired LANs to which fixed terminals are connected are connected to a wireless LAN via an access point on each wired LAN,
said access point apparatus
has a filtering table for storing authentication information of the access points of the sources of frames received from the wireless LAN, and a filtering unit for referencing said filtering table for any frame received from the wireless LAN and, if it is authenticated, bridging the frame from the wireless LAN to the wired LAN or, if it is not authenticated, bridging the frame from the wireless LAN to the wired LAN after having acquired authentication by the access point having delivered the frame.

14. An access point apparatus, as claimed in Claim 13, wherein:
said access point apparatus
stores a frame received from the wireless LAN into said filtering table if authentication is newly acquired from the access point having delivered the frame.

15. An access point apparatus for use in inter-LAN connection whereby a plurality of wired LANs to which fixed terminals are connected are connected to a wireless LAN via an access point on each wired LAN,
said access point apparatus
has a filtering table for storing prior registration information of the access points of the sources of frames received from the wireless LAN, and a filtering unit for referencing said filtering table for frames received from the wireless LAN and bridging any frame delivered from any access point registered in advance to the wired side LAN.

16. An access point apparatus, as claimed in Claim 15, wherein:
said access point apparatus
stores or deletes as appropriate information on prior registration of the access points of the sources of frames to be stored in said filtering table.

17. An access point apparatus, as claimed in Claim 12, wherein:
said access point apparatus
stores into said filtering table the address of fixed terminals on the wired LANs on the basis of the source addresses of frames received from the wired LAN side, and deletes, on the basis of the source address of any frame received from the wireless LAN side and bridged to the wired LAN side, the pertinent stored address.

18. An access point apparatus, as claimed in Claim 13, wherein:
said access point apparatus
stores into said filtering table the address of fixed terminals on the wired LANs on the basis of the source addresses of frames received from the wired LAN side, and deletes, on the basis of the source address of any frame received from the wireless LAN side and bridged to the wired LAN side, the pertinent stored address.

19. An access point apparatus, as claimed in Claim 15, wherein:
said access point apparatus
stores into said filtering table the address of fixed terminals on the wired LANs on the basis of the source addresses of frames received from the wired LAN side, and deletes, on the basis of the source address of any frame received from the wireless LAN side and bridged to the wired LAN side, the pertinent stored address.

20. A LAN system having a plurality of independent wired LANs, each equipped with a plurality of terminal apparatuses mutually connected by a LAN cable and one or more wireless access point apparatus or apparatuses, wherein each of said wireless access point apparatuses establishes mutual connection with other one or more wireless access point apparatus or apparatuses in a random back-off procedure so as to form a single common domain among a plurality of independent wired LANs.
